# EUROPÄISCHE PATENTSCHRIFT

(11) **EP 1 706 534 B1**
(45) Veröffentlichungstag und Bekanntmachung des Hinweises auf die Patenterteilung: **23.09.2009**
(21) Anmeldenummer: 04798067.7
(22) Anmeldetag: 24.11.2004
(51) Int. Cl.: D06H 1/04, G08B 13/24

(54) **TEXTILETIKETT UND VERFAHREN ZU DESSEN HERSTELLLUNG**
TEXTILE LABEL AND METHOD FOR PRODUCTION THEROF
ETIQUETTE TEXTILE ET SON PROCEDE DE PRODUCTION

(30) Priorität: 08.12.2003 DE 10357193
(43) Veröffentlichungstag der Anmeldung: 04.10.2006
(73) Patentinhaber: Schreiner Group GmbH & Co. KG, 85764 Oberschleissheim (DE)
(72) Erfinder: HOFMAIR, Stefan, 85368 Moosburg (DE); SCHIRMER, Hans-Dieter, 95028 Hof (DE); SURKAU, Reinhard, 82256 Fürstenfeldbruck (DE)
(74) Vertreter: Epping - Hermann - Fischer
(86) Internationale Anmeldenummer: PCT/EP2004/013337
(87) Internationale Veröffentlichungsnummer: WO 2005/054565

(56) Entgegenhaltungen:
- WO-A-01/75843
- WO-A-98/28722
- GB-A- 2 328 836
- US-A- 4 581 524
- US-A- 4 783 646
- US-A- 5 896 087
- US-A- 5 920 290
- US-A- 6 114 962

## Beschreibung

Die vorliegende Erfindung betrifft ein Textiletikett, worunter ein Etikett mit mindestens einer textilen Lage verstanden wird, sowie ein Verfahren zu dessen Herstellung. Ferner betrifft die Erfindung ein Verfahren zur Kennzeichnung von Kleidungsstücken mit derartigen Etiketten, sowie ein mit einem derartigen Etikett versehenes Kleidungsstück. Unter "textil" wird nachfolgend, dem allgemeinen Sprachgebrauch entsprechend, eine Beschaffenheit aus faserigem Material - gewebt, gewirkt oder als sogenanntes "nonwoven" (vliesartig ungewebt) ausgeführt - verstanden, wobei es sich um - gesponnene oder ungesponnene - Natur-, Kunst- oder Mischfasern handeln kann.

Üblicherweise werden Kleidungsstücke sowie andere Textilien mit Etiketten der eingangs genannten An versehen. Das Textiletikett trägt dabei beispielsweise eine Produktiomarke, eine Hersteller- und/oder Herkunftsangatie, Pflegehinweise, Angaben zur Stoffzusammensetzung etc.

Ebenfalls seit längerem üblich ist es, Kleidungsstücke - wie auch andere Waren - mit sogenannten RFID-Schildchen bzw. -Etiketten zu versehen. RFID, die Kurzform für "Radio Frequency ldentification", steht dabei für die Ausstattung mit einer Transponder-Anordnung, welche im wesentlichen aus einem Chip und einer Antenne besteht. Der Dateninhalt des Chips läßt sich mittels geeigneter Lesegeräte berührungslos auslesen, wobei die Energieversorgung induktiv erfolgt. Derartige RFID-Systeme werden beispielsweise zur Diebstahlsicherung in Kaufhäusern eingesetzt, können aber auch andere Aufgaben erfüllen, insbesondere im Rahmen komfortabler Logistiksysteme, wobei Warenflüsse an jedem Abschnitt der Produktions- und Logistikkette einfach und mit geringer Fehleranfälligkeit überwacht werden können. Durch das berührungslose Auslesen des an der jeweiligen Ware angebrachten Transponder-Chips kann die Ware innerhalb von Sekundenbruchteiien in einer Datenbank ein- oder ausgebucht werden. Gegenüber einem Barcode-Scanner entfällt die lästige Suche nach dem Barcode-Etikett. Ferner bieten RFID-Systeme je nach Ausstattung den Vorteil eines veränderbaren Speicherinhalts auf dem Transponder-Chip. Entsprechend können nicht nur Informationen ausgelesen, sondern beim Durchlaufen logistischer Prozesse und unter Umständen bereits bei der Herstellung an unterschiedlichen Stationen auch Daten auf den Chip übertragen werden.

Häufig sind RFID-Etikettenaufbauten relativ starr, was bei der Verwendung im Textilsektor meist unerwünscht ist. Daneben existieren auch Textiletiketten mit RFID-Ausstattung, welche zwar wesentlich biegsamer und daher haptisch weniger auffällig, jedoch oft unzureichend gegen Umwelteinflüsse geschützt sind. So ist es im Textilsektor erwünscht, daß bei Wäsche oder Reinigung des mit einem RFID-Etikett ausgestatteten Kleidungsstücks die Transponder-Anordnung unbeschädigt bleibt, dies können herkömmliche RFID-Etiketten allerdings nicht leisten.

Aus FR-A-2 823 898 (Oberbegriff des Anspruches 1) ist ein auf Kleidungsstücken anbringbares, gewebtes Schildchen bekannt, welches mit einer aufgeklebten Transponder-Anordnung versehen ist, wobei empfindliche Stellen des Chips mit einer Silikondichtmasse gegen Umwelteinflüsse geschützt werden. Die Silikondichtung erhöht jedoch zum einen den Fertigungsaufwand, zum anderen erreicht der Aufbau nicht immer die gewünschte Biegsamkeit, insbesondere angesichts der Tatsache, daß gerade bei Kleidungsstücken Etiketten idealerweise kaum fühlbar sein sollen. Beim Aufnähen des Schildchens auf ein Kleidungsstück besteht zudem die Gefahr der Beschädigung der Transponderanordnung durch Nadeleinstich.

Der Schutz einer Transponderanordnung eines Etiketts mittels der Klebstoffschicht, mit welcher das Etikett an seinem Anbringungsort befestigt ist, gegen von der Anbringungsseite her einwirkende Umwelteinflüsse ist aus WO 01/75843 A1 bekannt. Auf der von der Anbringungsseite abgewandten Seite weist das Etikett eine Folie als Grundschicht auf. Die Transponderanordnung ist auf der Folie durch Aufdrucken einer elektrisch leitenden Tinte, Ätzen, Stanzen oder Wickeln gebildet. Durch die Folie ergeben sich für den Einsatz in bzw. an einem Kleisdungsstück ungünstige haptische Eigenschaften. US 4,783,646 beschreibt ein herkömmliches Transponderetikett, welches beidseitig Folien aufweist und somit haptisch noch weniger erwünschte Eigenschaften aufweist. US 5,920,290 beschreibt verschiedene Aufbauten von Transponderetiketten, wobei eine Abdichtung gegen die Umgebung durch nicht näher beschriebene zusätzliche Schichten erfolgt, welche die Herstellung verkomplizieren.

Angesichts der geschilderten, in bestimmten Anwendungsfällen bestehenden Unzulänglichkeiten des Stands der Technik liegt der vorliegenden Erfindung die Aufgabe zugrunde, ein Textiletikett mit Transponder-Anordnung zu schaffen, welches eine hohe Biegsamkeit bei zugleich hoher Beständigkeit gegen hohe Termperaturen, Wasser, Waschlaugen und chemische Reinigungsmittel aufweist, sowie kostengünstig herstellbar ist. Ferner ist es Aufgabe der Erfindung, ein Herstellungsverfahren für derartige Etiketten sowie ein Verfahren zur Kennzeichnung von Kleidungsstücken mit derartigen Etiketten bereitzustellen. Zudem ist es Aufgabe der Erfindung, Kleidungsstücke zu schaffen, welche über eine haptisch möglichst unauffällige RFID-Kennzeichnung verfügen, deren Funktion auch nach mehrmaligem Waschen oder Reinigen des Kleidungsstück sicher erhalten bleibt.

Gemäß einem Aspekt der Erfindung wird die Aufgabe durch ein Textiletikett nach Patentanspruch 1 gelöst. Bevorzugte Ausführungsformen des erfindungsgemäßen Textiletiketts können gemäß den Patentansprüchen 2-11 ausgestaltet sein. Zur einfacheren Bezugnahme wird die weitere (die Transponderanordnung auf der Grundschicht fixierende) Klebstoffschicht nachfolgend als erste Klebstoffschicht bezeichnet, die im oberbegriff des Anspruchs 1 genannte Klebstoffschicht dagegen als zweite Klebstoffschicht.

Bei dem erfindungsgemäßen Textiletikett ist der Chip (und/oder sind ggf. andere elektronische Bauteile) der Transponderanordnung vollständig in Klebstoff eingebettet, welcher nicht nur die Verbindung mit der textilen Grundschicht und einem ebenfalls textilen Oberetikett oder aber dem Kleidungsstück selbst gewährleistet, sondern darüberhinaus für eine überaus wirksame Abdichtung sorgt. Der Klebstoff oder Klebstofflagen wird von der textilen Grundschicht sowie ggf. der weiteren textilen Lage gut in die Gewebestruktur aufgenommen, wodurch sich ein flexibler aber sehr unempfindlicher Materialverbund ergibt, der auch unter mechanischer, thermischer und/oder chemischer Beanspruchung nicht zu Delaminierung oder Verziehen neigt. Vorteilhaft für die Haltbarkeit und Zuverlässigkeit der Transponder-Anordnung ist es, diese vollständig, d.h. nicht nur den Chip, mit Klebstoff abzudichten. Eine derartige Anordnung wird für den überwiegenden Großteils der möglichen Anwendungen vorzugsweise zum Einsatz kommen.

Das erfindungsgemäßen Textiletikett ist biegsam, bedruckbar, waschbar, wasserdicht, wasserdampfbeständig, unempfindlich gegenüber Reinigungschemikalien, mit gängigen Verfahren (z.B. Tintenstrahldruck, TTR) bedruckbar bzw. nachbedruckbar, druckbeständig gegen Überdrücke bis 30 bar, patchbar und/oder einnähbar und im Format üblicher Textiletiketten herstellbar. Dabei ist vorzugsweise nicht nur der Chip, sondern auch die Antenne durch völlige Bedeckung mit Klebstoff geschützt, wodurch mangels Antennenkorrosion auch eine hohe Langlebigkeit ersielt wird. Durch Verwendung geeigneter Klebstoffe, vorzugsweise Polyester-Kleber für die erste und Heißkleber, besonders bevorzugt Heißkleber auf Polyesterbasis, für die zweite Klebstoffschicht kann eine Temperaturbeständigkeit bis 170 Grad Celsius erreicht werden. Für anspruchsvollere logistische Aufgaben wird, je nach Einsatzfall, vorzugsweise ein Chip eingesetzt, welcher programmierbar und/oder mit einem (ggf. partiellen) Schreibschutz ausgerüstet und/oder mit einem Speicherplatz von mindestens 128 Byte ausgestattet ist. Die vorzugsweise auf Grundschicht und/oder Oberetikett befindlichen alphanumerischen und/oder graphischen Zeichen können beispielsweise aufgedruckt, aufgestickt oder eingewebt sein.

Eine Lösung gemäß einem weiteren Aspekt der Erfindung stellt ein Kleidungsstück nach Patentanspruch 12 dar. Die RFID-Kennzeichnung eines derartigen erfindungsgemäßen Kleidungsstücks zeichnet sich durch hohe Unempfindlichkeit gegen äußere Einflüsse, insbesondere Waschen mit hohen Temperaturen oder chemische Reinigung aus, ohne daß Tragekomfort und haptische Anmutung des Kleidungsstücks wesentlich beeinträchtigt würden.

Gemäß einem weiteren Aspekt der vorliegenden Erfindung wird die Aufgabe durch ein Herstellungsverfahren nach Patentanspruch 13 gelöst. Bevorzugte Ausführungsformen des erfindungsgemäßen Verfahrens können gemäß den Patentansprüchen 14-19 ausgestaltet sein. Indem der verwendete Klebstoff neben Befestigungs- auch Dichtaufgaben übernimmt, kann das Verfahren relativ einfach und kostengünstig gestaltet sein. Insbesondere bei der vorzugsweisen Verwendung eines Polyester-Klebers für die erste Klebstoffschicht besteht gemäß einer besonders bevorzugten Ausgestaltung des erfindungsgemäßen Verfahrens die Möglichkeit, die Antenne aus einem flachen bzw. folienartigen Metall-, vorzugsweise Kupferrohling herauszuätzen, nachdem der Metallrohling auf die textile Grundschicht aufgeklebt wurde. Dies vermindert die Gefahr der Beschädigung der Antenne während der Fertigung erheblich. Die Bestückung mit dem Chip kann dann anschließend erfolgen.

Grundsätzlich kann die Chip-Montage auf verschiedene Weisen technisch realisiert werden. Bei der sogenannten Flip-Chip-Montage (FC) wird die Verbindung mittels ACF (anisotropic conductive film), ACP (anisotropie conductive paste), Ultraschall, Direktkontakt, Thermokompression oder ähnlichen direktmetallischen Verbindungstecliniken hergestellt. Üblicherweise wird ein sogenannter "Underfiller" (z.B. ZweiKomponenten-Epoxy-Kleber) eingesetzt. Bei der Modul-Montage (MM) wird der Chip mit Metall-Fahnen (ggf. vergossen) per Thermokompression, Löten, Laser- oder Ultraschall-Schweißen verbunden; das Chip-Modul wird aufgekrimpt, "aufgeclinched", geklebt, gelötet oder auf ähnliche Weise mit der restlichen Anordnung verbunden. Auch hier ist zusätzlicher Klebstoff unter dem Modul zur mechanischen Stabilisierung vorteilhaft.

Gemäß einem weiteren Aspekt der vorliegenden Erfindung wird obige Aufgabe durch ein Kennzeichnungsverfahren nach Patentanspruch 20 gelöst.

Nachfolgend werden Ausführungsbeispiele anhand der zugehörigen, rein schematisch aufzufassenden Zeichnungen näher erläutert. Die Zeichnungen sind nicht maßstabsgerecht, insbesondere sind in Schnittdarstellungen Schichtdicken aus Anschaulichkeitsgründen stark übertrieben dargestellt. Einander entsprechende Teile sind in den verschiedenen Figuren mit den jeweils gleichen Bezugszeichen versehen. Es zeigt
- Fig. 1a: ein bekanntes Textiletikett ohne Oberetikett in der Draufsicht, wobei die normalerweise verdeckt ange- ordnete Transponder-Anordnung freiliegend darge- stellt ist,
- Fig. 1b: das Textiletikett aus Fig. 1a als Querschnitten- sicht in der durch die Linie A-A' angedeuteten Schnittebene,
- Fig. 2a: ein erfindungsgemäßes Textiletikett mit Oberetikett in der Draufsicht, wobei die normalerweise verdeckt angeordnete Transponder-Anordnung freiliegend dar- gestellt ist,
- Fig. 2b: das Textiletikett aus Fig. 2a als Querschnittan- sicht in der durch die Linie B-B' angedeuteten Schnittebene,
- Fig. 3a: ein erfindungsgemäßes Textiletikett mit Oberetikett und abtrennbarem Abschnitt in der Draufsicht, wobei die normalerweise verdeckt angeordnete Transponder- Anordnung freiliegend dargestellt ist, .
- Fig. 3b: das Textiletikett aus Fig. 3a als Querschnittan- sicht in der durch die Linie C-C' angedeuteten Schnittebene,
- Fig. 4: ein ähnlich Fig. 3a/3b gestaltetes Textiletikett, welches zwischen Futterstoff und Oberstoff eines erfindungsgemäß gekennzeichneten Kleidungsstücks eingenäht ist, und
- Fig. 5: ein weiteres ähnlich Fig. 2a/2b gestaltetes Textil- etikett, welches sich selbst taschenartig umschlie- ßend in ein erfindungsgemäß gekennzeichneten Klei- dungsstück eingenäht ist.

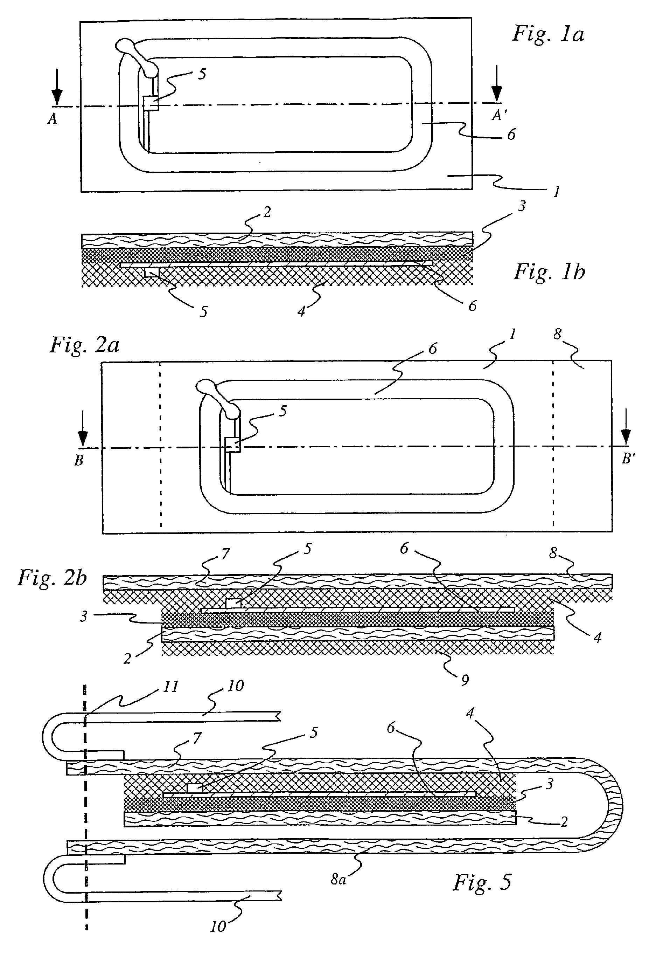

Das in Fig. 1a und Fig. 1b dargestellte bekannte Textiletikett 1 besteht im wesentlichen aus einer bedruckbaren textilen Grundschicht 2, zwei Klebstoffschichten 3, 4 und einer Transponder-Anordnung mit Chip 5 und Antenne 6. Mittels der ersten, vorzugsweise aus Polyester-Kleber bestehenden Klebstoffschicht 3 sind Antenne 6 und Chip 5 auf die textile Grundschicht 2 aufgeklebt. Anstelle eines direktkontaktierten Chips 5 ist auch der Einsatz eines Chipmoduls mit Metallkontaktierungen zur Antenne 6 möglich. Der Polyester-Kleber bietet den Vorteil guter Wasserresistenz sowie Resistenz gegen Waschlauge und chemische Reinigungsmittel, sehr geringer Bruchempfindlichkeit, hoher Hitzebeständigkeit und somit hervorragender Dichtwirkung auch unter widrigen Umgebungsbedingungen. Ferner tragen die Mäterialeigenschaften des flexiblen Polyester-Klebers vorteilhaft zur Biegsamkeit der Klebstoffschicht 3 bei. Aufgrund der Ätzbeständigkeit des Polyester-Klebers kann bei der Herstellung des Textiletiketts 1 zuerst eine Metallfolie (günstigerweise aus Kupfer bzw. einer geeigneten Kupferlegierung) mit der Grundschicht 2 verklebt und anschließend die Antenne 6 durch Ätzen erzeugt werden. Somit wird das Problem umgangen, empfindliche Antennenstrukturen aufkleben zu müssen. Beim Ätzen der Antenne bleibt die (Polyester-)Klebstoffschicht 3 weitestgehend unverändert und erhält insbesondere ihre dichtende Wirkung aufrecht. Die zweite Klebstoffschicht 4, welche sich vorteilhafterweise über die gesamte Transponder-Anordnung erstreckt, besteht vorzugsweise aus Heißkleber, welcher ebenfalls gute Dichteigenschaften auch unter widrigen Umgebungsbedingungen aufweist.

Der Heißkleber bietet zudem den Vorteil, daß als zusammenhängende Bahn gefertigte erfindungsgemäße Textiletiketten ohne Liner aufwickelbar sind. Der Schmelzpunkt des Heißklebers läßt sich nach Wunsch einstellen, zudem sind die Hafteigenschaften auf Textilien sehr gut. Mittels der zweiten Klebstoffschicht 4 kann das Textiletikett 1 auf ein Kleidungsstück aufgeklebt (aufgebügelt) werden. Die Transponderanordnung ist dann sicher und, aufgrund der Klebstoffschichten 3, 4, dicht zwischen zwei textilen Lagen eingebettet.

Das in Fig. 2a und Fig. 2b dargestellte erfindungsgemäße Textiletikett ist ähnlich aufgebaut. Es weist jedoch neben textiler Grundschicht 2, zwei Klebstoffschichten 3, 4 und einer Transponder-Anordnung mit Chip 5 und Antenne 6 noch ein Oberetikett 7 auf, welches über die Grundschicht 2 hinausragende Bereiche 8 besitzt (in Fig. 2a durch strichlierte Linien angedeutet), wobei die zweite Klebstoffschicht 4 in diese Bereiche hineinreicht. Ferner ist auf der Chip 5 und Antenne 6 abgewandten Seite der Grundschicht 2 eine weitere Klebstoffschicht 9, wie die zweite Klebstoffschicht 4 vorzugsweise aus Heißkleber bestehend, angeordnet. Ein derartiger Aufbau bietet sich dann an, wenn das Material, auf welches das Textiletikett aufgeklebt werden soll, weniger geeignet ist, die Transponderanordnung als zweite textile Lage zu schützen. Alphanumerische oder grafische Zeichen können auf das Oberetikett 7 gedruckt, gestickt, oder in dieses eingewebt sein.

Zweckmäßig kann auch eine Ausführungsform sein, bei welcher die über die Grundschicht 2 hinausragenden Bereiche 8 klebstoffrei sind und die Grundschicht 2 keine weitere Klebstoffschicht 9 aufweist; bei einer derartige Gestaltung kann das Textiletikett dann im Bereich der über die Grundschicht 2 hinausragenden Bereiche 8 auf ein Kleidungsstück oder anderes Textil aufgenäht werden. Wird ein über die Grundschicht 2 hinausragender Bereich 8a besonders lang ausgeführt, so kann das Textiletikett "taschenartig" mit einem Kleidungsstück oder sonstigen Textil, beispielsweise mit dem Futterstoff 10, vernäht werden, wie in Fig. 5 (mit gleichen Bezugszeichen für Fig. 2b entsprechende Teile) dargestellt ist. Der überlange über die Grundschicht 2 hinausragende Bereich 8 ist dabei um das restliche Etikett herumgeschlungen. Die Befestigung erfolgt über eine einzige durchgehende Naht 11.

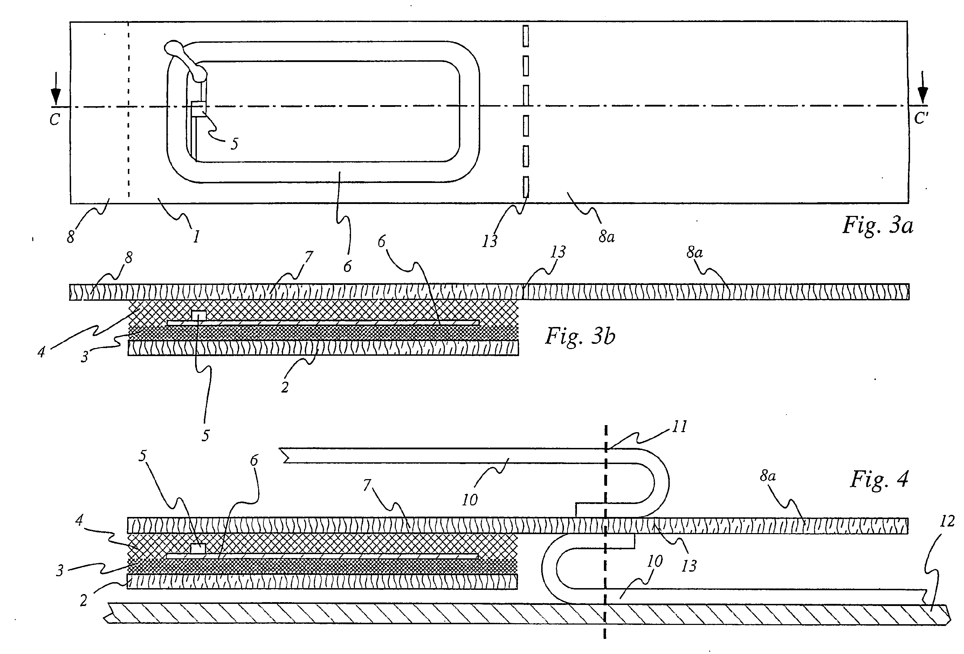

Das in Fig. 3a und Fig. 3b dargestellte Textiletikett weist wiederum eine textile Grundschicht 2, zwei Klebstoffschichten 3, 4, eine Transponder-Anordnung mit Chip 5 und Antenne 6 und ein Oberetikett 7 auf, welches klebstofffreie, über die Grundschicht 2 hinausragende Bereiche 8, 8a besitzt. Der längere Bereich 8a, welcher sich vorzugsweise mindestens ein Drittel, besonders bevorzugt über mindestens die Hälfte der Gesamtlänge der Grundschicht 2 erstreckt, ist dabei über eine Perforation 13 vom restlichen Textiletikett 1 abtrennbar. Anstelle der Perforation 13 sind auch andere Trennhilfsmittel, etwa ein Einschnitt oder auch nur eine aufgedruckte Schnittlinie, vorstellbar. Der abtrennbare, mit alphanumerischen oder graphischen Zeichen (nicht dargestellt) versehene Bereich 8a kann beispielsweise als Belegabschnitt dienen. Bei entsprechender Vernähung kann eine Perforation 13 bei erfindungsgemäßen Textiletiketten 1 auch zur Abtrennung des die Transponder-Anordnung enthaltenden Etikettenteils dienen.

In Fig. 4 ist eine gegenüber Fig. 3a/3b ähnliche Ausgestaltung der Erfindung dargestellt. Insbesondere ist anhand Fig. 4 zu erkennen, wie ein Kleidungsstück erfindungsgemäß besonders vorteilhaft gekennzeichnet werden kann. Einander entsprechende Teile sind wieder mit den gleichen Bezugszeichen versehen. Die dargestellte Ausführungsform weist nur einen über die Grundschicht 2 hinausragenden Bereich 8a auf. Dieser ist mittels der durchgehenden Naht 11 so mit dem Futterstoff 10 eines Kleidungsstücks vernäht, daß sich der Chip 5 und Antenne 6 enthaltende Teil des Textiletiketts zwischen Futterstoff 10 und Oberstoff 12 befindet. Dort fällt er kaum auf, da er nicht nur sichtgeschützt angebracht, sondern aufgrund der Biegsamkeit und geringen Dicke des Textiletiketts nur durch bewußtes Suchen ertastbar ist. Der Großteil des abtrennbaren, mit alphanumerischen oder graphischen Zeichen (nicht dargestellt) versehenen Bereichs 8a ragt aus dem Futterstoff heraus, um der visuellen I<ennzeichnung des Kleidungsstücks zu dienen. Aufgrund geeigneter Anordnung der Perforation 13 oder einer anderen geeigneten Trennhilfe, läßt sich der aus dem Futterstoff herausragende Bereich 8a größtenteils abtrennen, etwa um als Belegabschnitt zu dienen oder den Tragekomfort eines direkt auf der Haut getragenen Kleidungsstücks zu erhöhen.

## Patentansprüche

1. Textiletikett, aufweisend
- eine textile Grundschicht (2),
- eine Transponderanordnung, welche auf die Grundschicht aufgeklebt ist und eine Antenne (6) und mindestens ein elektronisches Bauteil aufweist,
**dadurch gekennzeichnet, daß** die Transponderanordnung mittels einer ersten Klebstoffschicht (3) aufgeklebt ist, mittels der ersten Klebstoffschicht (3) sowie einer zweiten Klebstoffschicht (4) gegen Umwelteinflüsse abgedichtet ist, wobei eine weitere textile Lage über die zweite Klebstoffschicht (4) mit dem restlichen Etikett verklebt ist und es sich bei der weiteren textilen Lage um ein Oberetikett (7) handelt, das graphische und/oder alphanumerische Zeichen aufweist.

2. Textiletikett gemäß Anspruch 1, wobei das elektronische Bauteil bzw. eines der elektronischen Bauteile ein Chip (5) ist.

3. Textiletikett gemäß einem der vorangehenden Ansprüche, wobei sich die Klebstoffschicht (4) flächig über die gesamte Transponderanordnung erstreckt.

4. Textiletikett gemäß einem der vorangehenden Ansprüche, wobei die weitere Klebstoffschicht (3) aus einem Polyester-Kleber gebildet ist.

5. Textiletikett gemäß einem der vorangehenden Ansprüche, wobei die Klebstoffschicht (4) aus einem Heißkleber gebildet ist.

6. Textiletikett gemäß einem der vorangehenden Ansprüche, wobei die Antenne (6) zumindest überwiegend aus Kupfer besteht.

7. Textiletikett gemäß einem der vorangehenden Ansprüche, wobei die Grundschicht (2) graphische und/oder alphanumerische Zeichen aufweist.

8. Textiletikett gemäß Anspruch 1, wobei das Oberetikett (7) die Grundschicht (2) nach mindestens einer Seite überragt.

9. Textiletikett gemäß Anspruch 8, wobei zumindest ein Teil des die Grundschicht (2) überragenden Bereichs (8, 8a) des Oberetiketts (7) vom restlichen Etikett abtrennbar ist.

10. Textiletikett gemäß einem der Ansprüche 8-9, wobei der die Grundschicht (2) überragende Bereich (8, 8a) des Oberetiketts (7) mit einem Kleidungsstück vernäht ist.

11. Textiletikett gemäß einem der Ansprüche 8-10, wobei der die Grundschicht (2) überragende Bereich (8, 8a) des Oberetiketts (7) mit einem Kleidungsstück verklebt ist.

12. Kleidungsstück, aufweisend ein Etikett gemäß einem der Ansprüche 1-11.

13. Verfahren zur Herstellung eines Textiletiketts mit einer Transponderanordnung, welche eine Antenne (6) und mindestens ein weiteres elektronisches Bauteil (5) aufweist, wobei das Verfahren einen Schritt aufweist, mit welchem eine Klebstoffschicht (4) so aufgebracht wird, daß diese zumindest
das weitere elektronische Bauteil (5) überdeckt und abdichten,
**dadurch gekennzeichnet, daß** das Verfahren ferner zumindest folgende Schritte aufweist
- Aufbringen einer weiteren Klebstoffschicht (3) auf eine textile Grundschicht (2),
- Anbringen der Transponderanordnung auf der weiteren Klebstoffschicht (3),
- Verkleben einer weiteren textilen Lage über die erstgenannte Klebstoffschicht (4) mit dem restlichen Etikett, wobei es sich bei der weiteren textilen Lage um ein Oberetikett (7) handelt, das graphische und/oder alphanumerische Zeichen aufweist.

14. Verfahren gemäß Anspruch 13, wobei die Klebstoffschicht (4) so aufgebracht wird, daß sie die gesamte Transponderanordnung überdeckt.

15. Verfahren gemäß einem der Ansprüche 13-14, wobei das Anbringen der Transponderanordnung das Aufkleben eines Metallfolienstücks und anschließende Ätzen der Antenne (6) aus dem Metallfolienstück beinhaltet.

16. verfahren gemäß Anspruch 15, wobei ein Metallfolienstück, welches überwiegend aus Kupfer besteht, verwendet wird.

17. Verfahren gemäß einem der Ansprüche 13-16, wobei die weitere Klebstoffschicht (3) aus Polyester-Kleber hergestellt wird.

18. Verfahren gemäß einem der Ansprüche 13-17, wobei die Klebstoffschicht (4) aus Heißkleber hergestellt wird.

19. Verfahren gemäß einem der Ansprüche 13-18, wobei mittels der Klebstoffschicht (4) ein Verkleben mit einer weiteren textilen Lage erfolgt.

20. Verfahren zur Kennzeichnung eines Kleidungsstücks, wobei ein Etikett gemäß einem der Ansprüche 1-9 mit dem Kleidungsstück verklebt und/oder vernäht wird.

## Claims

1. Textile label, having
- a textile base layer (2),
- a transponder arrangement, which is adhesively bonded onto the base layer, and an antenna (6), and at least one electronic component,
**characterized in that** the transponder arrangement is adhesively bonded by means of a first adhesive layer (3), is sealed against environmental influences by means of the first adhesive layer (3) and a second adhesive layer (4), wherein a further textile layer is adhesively attached via the second adhesive layer (4) to the remaining label, and the further textile layer is a top label (7) that has graphic and/or alphanumeric characters.

2. The textile label according to Claim 1, wherein the electronic component, or one of the electronic components, is a chip (5).

3. The textile label according to one of the preceding claims, wherein the adhesive layer (4) extends in a planar manner over the entire transponder arrangement.

4. The textile label according to one of the preceding claims, wherein the further adhesive layer (3) is formed from a polyester adhesive.

5. The textile label according to one of the preceding claims, wherein the adhesive layer (4) is formed from a hot melt adhesive.

6. The textile label according to one of the preceding claims, wherein the antenna (6) is composed at least predominantly of copper.

7. The textile label according to one of the preceding claims, wherein the base layer (2) has graphic and/or alphanumeric characters.

8. The textile label according to Claim 1, wherein the top layer (7) extends beyond the base layer (2) at least towards one side.

9. The textile label according to Claim 8, wherein at least one part of the area (8, 8a) of the top label (7) extending beyond the base layer (2) can be separated from the remainder of the label.

10. The textile label according to one of the Claims 8 - 9, wherein the area (8, 8a) of the top label (7) extending beyond the base layer (2) is sewn to a piece of clothing.

11. The textile label according to one of the Claims 8 - 10, wherein the area (8, 8a) of the top label (7) extending beyond the base layer (2) is adhesively attached to a piece of clothing.

12. A piece of clothing, having a label according to one of the Claims 1 - 11.

13. A method for producing a textile label with a transponder arrangement, which has an antenna (6) and at
least one further electronic component (5), wherein the method comprises a step with which an adhesive layer (4) is applied in such a way that it covers and seals at least the further electronic component (5),
**characterized in that** the method further comprises at least the following steps
- application of a further adhesive layer (3) onto a textile base layer (2),
- mounting of the transponder arrangement onto the further adhesive layer (3),
- adhesive attachment of a further textile layer over the first named adhesive layer (4) to the remaining label, wherein the further textile label is a top label (7) that has graphic and/or alphanumeric characters.

14. The method according to Claim 13, wherein the adhesive layer (4) is applied such that it covers the entire transponder arrangement. -

15. The method according to one of the Claims 13 - 14, wherein the application of the transponder arrangement includes the adhesive attachment of a metal film piece and the subsequent etching of the antenna (6) out of the metal film piece.

16. The method according to Claim 15, wherein a metal film piece is used, which is composed predominantly of copper.

17. The method according to one of the Claims 13 - 16, wherein the further adhesive layer (3) is produced from polyester adhesive.

18. The method according to one of the Claims 13 - 17, wherein the further adhesive layer (4) is produced from hot melt adhesive.

19. The method according to one of the Claims 13 - 18, wherein by means of the adhesive layer (4) an adhesion with a further textile layer occurs.

20. Method for labeling a piece of clothing according to one of the Claims 1-9, wherein a label is adhesively attached and/or sewn to a piece of clothing.

## Revendications

1. Etiquette textile, comportant
- une couche de base textile (2),
- un arrangement de transpondeur collé sur ladite couche de base, une antenne (6) et au moins un composant électronique,
**caractérisée en ce que** l'arrangement de transpondeur est collé au moyen d'une première couche d'adhésif (3), qu'il est étanché contre les influences de l'environnement au moyen de ladite première couche d'adhésif (3) ainsi que d'une seconde couche d'adhésif (4), sachant qu'une couche textile supplémentaire est collée sur le reste de l'étiquette par-dessus la seconde couche d'adhésif (4) et que la couche textile supplémentaire est une étiquette supérieure (7), laquelle comporte des caractères graphiques et/ou alphanumériques.

2. Etiquette textile selon la revendication 1, dans laquelle le composant électronique ou l'un des composants électronique est une puce (5).

3. Etiquette textile selon l'une quelconque des revendications précédentes, dans laquelle la couche d'adhésif (4) s'étend en nappe sur toute la surface de l'arrangement de transpondeur.

4. Etiquette textile selon l'une quelconque des revendications précédentes, dans laquelle la couche d'adhésif supplémentaire (3) se compose d'un adhésif polyester.

5. Etiquette textile selon l'une quelconque des revendications précédentes, dans laquelle la couche d'adhésif (4) se compose d'un adhésif thermofusible.

6. Etiquette textile selon l'une quelconque des revendications précédentes, dans laquelle l'antenne (6) se compose au moins en majeure partie de cuivre.

7. Etiquette textile selon l'une quelconque des revendications précédentes, dans laquelle la couche de base (2) comporte des caractères graphiques et/ou alphanumériques.

8. Etiquette textile selon la revendication 1, dans laquelle l'étiquette supérieure (7) déborde de la couche de base (2) au moins sur un côté.

9. Etiquette textile selon la revendication 8, dans laquelle une partie au moins de la zone (8, 8a) d'étiquette supérieure (7) débordant de la couche de base (2) peut être détachée du reste de l'étiquette.

10. Etiquette textile selon l'une quelconque des revendications 8 ou 9, dans laquelle la zone (8, 8a) d'étiquette supérieure (7) débordant de la couche de base (2) est cousue à un élément de vêtement.

11. Etiquette textile selon l'une quelconque des revendications 8 à 10, dans laquelle la zone (8, 8a) d'étiquette supérieure (7) débordant de la couche de base (2) est cousue à un élément de vêtement.

12. Elément de vêtement, comportant une étiquette selon l'une quelconque des revendications 1 à 11.

13. Procédé pour la fabrication d'une étiquette textile comportant un arrangement de transpondeur, lequel comporte une antenne (6) et au moins un composant électronique supplémentaire (5), sachant que le procédé comprend une étape par laquelle une couche d'adhésif (4) est appliquée de telle manière que cette dernière recouvre et étanche le composant électronique supplémentaire (5),
**caractérisé en ce que** le procédé comprend en outre au moins les étapes suivantes :
- application d'une couche d'adhésif supplémentaire (3) sur une couche de base textile (2),
- mise en place de l'arrangement de transpondeur sur la couche d'adhésif supplémentaire (3),
- collage d'une couche textile supplémentaire sur le reste d'étiquette par-dessus la couche d'adhésif premièrement citée (4), sachant que la couche textile supplémentaire est une étiquette supérieure (7), laquelle comporte des caractères graphiques et/ou alphanumériques.

14. Procédé selon la revendication 13, dans lequel la couche d'adhésif (4) est appliquée de telle manière qu'elle recouvre la totalité de l'arrangement de transpondeur.

15. Procédé selon l'une quelconque des revendications 13 ou 14, dans lequel la mise en place de l'arrangement de transpondeur comprend l'application par collage d'un morceau d'une feuille métallique et ensuite le mordançage de l'antenne (6) à partir du morceau de feuille métallique.

16. Procédé selon la revendication 15, dans lequel est utilisé un morceau de feuille métallique se composant principalement de cuivre.

17. Procédé selon l'une quelconque des revendications 13 à 16, dans lequel la couche d'adhésif supplémentaire (3) est réalisée en un adhésif polyester.

18. Procédé selon l'une quelconque des revendications 13 à 17, dans lequel la couche d'adhésif (4) est réalisée en un adhésif thermofusible.

19. Procédé selon l'une quelconque des revendications 13 à 18, dans lequel le collage avec une couche textile supplémentaire s'effectue via la couche d'adhésif (4).

20. Procédé pour l'étiquetage d'un élément de vêtement, dans lequel une étiquette selon l'une quelconque des revendications 1 à 9 est collée et/ou cousue à l'élément de vêtement.
